# FASCICULE DE BREVET EUROPEEN

(11) **EP 0 752 904 B1**
(45) Date de publication et mention de la délivrance du brevet: **19.08.1998**
(21) Numéro de dépôt: 95916695.0
(22) Date de dépôt: 31.03.1995
(51) Int. Cl.: B01D 29/01, B01D 63/08

(54) **DISPOSITIF DE FILTRATION DE FLUIDES BIOLOGIQUES ET SON APPLICATION**
FILTRATIONSVORRICHTUNG FÜR KÖRPERFLÜSSIGKEIT UND DEREN ANWENDUNG
BODY FLUID FILTRATION DEVICE AND APPLICATION THEREOF

(30) Priorité: 31.03.1994 FR 9403828
(43) Date de publication de la demande: 15.01.1997
(73) Titulaire: INOTEB, F-56920 Saint-Gonnery (FR)
(72) Inventeur: DELMAS, Olivier, Marcel, Joseph, F-37250 Montbazon (FR)
(74) Mandataire: Tonnellier, Jean-Claude
(86) Numéro de dépôt international: FR9500418
(87) Numéro de publication internationale: WO9526800

(56) Documents cités:
- GB-A- 2 199 510
- US-A- 2 765 923
- US-A- 4 021 353
- US-A- 4 265 762

## Description

L'invention a pour objet un dispositif filtrant destiné à séparer une phase liquide et une phase solide dans un fluide biologique, et son application dans la séparation d'un cryoprécipité de plasma sanguin. On sait que par décongélation, à une température comprise généralement entre +1 et +4°C, de plasma sanguin congelé, on obtient, outre une phase liquide, un résidu qui reste solide à cette température et qui est appelé cryoprécipité. Le cryoprécipité renferme des substances ayant un intérêt en thérapeutique, comme le facteur VIII de coagulation, ou comme les protéines coagulables par la thrombine, et en particulier le fibrinogène, la fibronectine et le facteur XIII. Le facteur VIII est utilisé dans le traitement de l'hémophilie de type A. Les protéines coagulables par la thrombine sont utilisées, sous la forme du cryoprécipité, notamment comme "colle biologique" ; voir par exemple le brevet FR-A-2 448 900. Les colles biologiques sont utilisées en chirurgie pour leurs propriétés hémostatiques et adhésives. Leur emploi permet d'éviter la réalisation de sutures ou l'emploi de colles synthétiques potentiellement toxiques.

Le cryoprécipité est obtenu, de manière usuelle, à partir d'un ou plusieurs prélèvements de sang total. On prélève du sang, par exemple chez un donneur sain, ou chez un patient inscrit dans un programme d'auto-transfusion, à l'aide d'un système de collecte du sang comprenant plusieurs poches de transfert reliées entre elles par des tubulures. La poche de recueil du sang contient un anti-coagulant. Par centrifugation, on sépare le plasma que l'on expulse dans une des autres poches. Le plasma est alors congelé, puis décongelé à une température permettant la fusion du plasma, mais suffisamment basse pour éviter la solubilisation du cryoprécipité. Pour la préparation d'un cryoprécipité, on peut faire référence par exemple à l'article de Masure, Vox Sang. 16, 1-9 (1969).

Des techniques particulières peuvent être mises en oeuvre pour éviter des contaminations du produit au cours de la préparation. De préférence, la préparation est réalisée en circuit clos, les transferts de liquides s'effectuant dans une série de poches et de tubulures préalablement reliées entre elles et stérilisées avant usage.

La séparation de la phase liquide et de la phase solide, c'est-à-dire la séparation du plasma résiduel et du cryoprécipité, peut être réalisée soit par centrifugation, soit par filtration.

La centrifugation présente divers inconvénients inhérents à cette méthode, c'est-à-dire, outre la nécessité de disposer d'une centrifugeuse, la difficulté de décanter le surnageant sans perturber le culot de centrifugation, et la difficulté de récupérer, après décantation, le culot qui occupe un faible volume alors qu'il est contenu dans un récipient de grand volume.

La filtration soulève elle aussi des difficultés techniques. Il convient en premier lieu d'éviter le colmatage du filtre. On peut utiliser comme filtres des membranes filtrantes poreuses, mais elles nécessitent en pratique l'utilisation d'une pompe auxiliaire. Dans le brevet français FR-A-2 283 700, on a proposé l'utilisation d'un filtre d'épaisseur, constitué par exemple par des matières fibreuses formant un enchevêtrement irrégulier à trois dimensions. Toutefois, avec les filtres d'épaisseur, la difficulté est de récupérer le cryoprécipité ; en pratique, il est nécessaire dans ce cas de redissoudre le cryoprécipité dans un solvant approprié.

Par ailleurs, divers systèmes de filtration, non adaptés à l'obtention de cryoprécipités, sont décrits dans les documents US-A-2 765 923, US-A-4 021 353, US-A-4 265 762 et GB-A-2 199 510.

Dans le but de remédier aux inconvénients des techniques antérieures d'obtention de cryoprécipités, l'invention a pour objet un procédé pour préparer par filtration un cryoprécipité au départ d'une suspension dudit cryoprécipité dans un fluide biologique. On peut opérer à l'aide d'un dispositif à poche filtrante comprenant les caractéristiques de la revendication 13.

Lors de l'utilisation, il convient que la surface filtrante soit rigide ou rigidifiée, et dans le cas où la surface filtrante n'est pas rigide par construction, le dispositif de l'invention comprend en outre es moyens permettant de la rigidifier.

L'élément filtrant présent dans la poche filtrante utilisée selon l'invention est sous forme de feuille ; cela signifie en particulier qu'il ne s'agit pas d'un filtre d'épaisseur, contrairement au filtre du brevet -A-FR 2 283 700. L'élément filtrant selon l'invention peut être réalisé notamment en un matériau tissé tel qu'une toile à bluter ou similaire. Les dimensions des pores doivent permettre de retenir le cryoprécipité. On utilise des filtres présentant des pores ayant des diamètres de 10-75 micromètres ; par exemple des diamètres de pores de l'ordre de 25 micromètres permettent de retenir de façon satisfaisante un cryoprécipité tout en limitant le colmatage du filtre. On peut aussi utiliser deux éléments filtrants superposés ayant éventuellement des diamètres de pores différents.

Il est évident que les deux parois en film souple, lorsqu'elles ne sont pas suffisamment déformables élastiquement, ne sont pas fortement tendues le long de la surface filtrante, de façon à pouvoir ménager un espace permettant d'accueillir le fluide biologique et le filtrat dans les compartiments amont et aval, respectivement, pendant la filtration.

L'une des caractéristique principales de la poche filtrante utilisée selon l'invention est que la surface filtrante doit être rigide au moins lors de l'utilisation, ce qui peut être obtenu de deux façons : soit l'élément filtrant comporte une zone périphérique rigide et par construction la surface filtrante occupant la zone centrale entourée par ledit cadre est suffisamment tendue, lors de la fabrication, pour acquérir la rigidité souhaitée (ce mode de réalisation fait partie de l'invention) ; soit l'élément filtrant est réalisé entièrement sous la forme d'une feuille souple et, dans ce cas il convient d'utiliser la poche filtrante en exerçant une tension suffisante pour que l'élément filtrant constitue alors un plan rigide. Le terme "rigide" signifie ici que lorsque la poche filtrante est immobilisée, la surface filtrante reste sensiblement plane lorsqu'une force de l'ordre de celle résultant de la pression atmosphérique pendant la filtration lui est appliquée dans une direction perpendiculaire au plan de ladite surface filtrante. La paroi souple de la poche, du côté rétentat, sous l'action de la pression atmosphérique, va alors, en fin de filtration, presser le rétentat sur la surface filtrante, peu déformable en raison de sa rigidification, ce qui va favoriser un bon essorage du cryoprécipité.

Le dispositif à poche filtrante, selon un mode de réalisation particulier, comprend un cadre rigide correspondant à ladite zone de scellement périphérique. Par exemple, le cadre est en forme de plaque rigide comportant un évidement central, et l'une des parois est scellée sur une des faces de ladite plaque tandis que l'autre paroi est scellée sur l'autre face de la plaque. L'élément filtrant est intercalé entre les deux parois. C'est bien entendu dans la zone correspondant à l'évidement central que s'effectuera la filtration par passage de la phase liquide à travers l'élément filtrant depuis le compartiment amont vers le compartiment aval. Avec ce mode de réalisation, on peut aussi réaliser une poche filtrante avec deux éléments filtrants en regard fixés, chacun à sa périphérie, sur l'une des faces de la plaque.

Le cadre, réalisé par exemple en matière plastique ayant une épaisseur suffisante pour lui conférer la rigidité souhaitée, peut avoir une forme quelconque, par exemple rectangulaire, circulaire ou ovale.

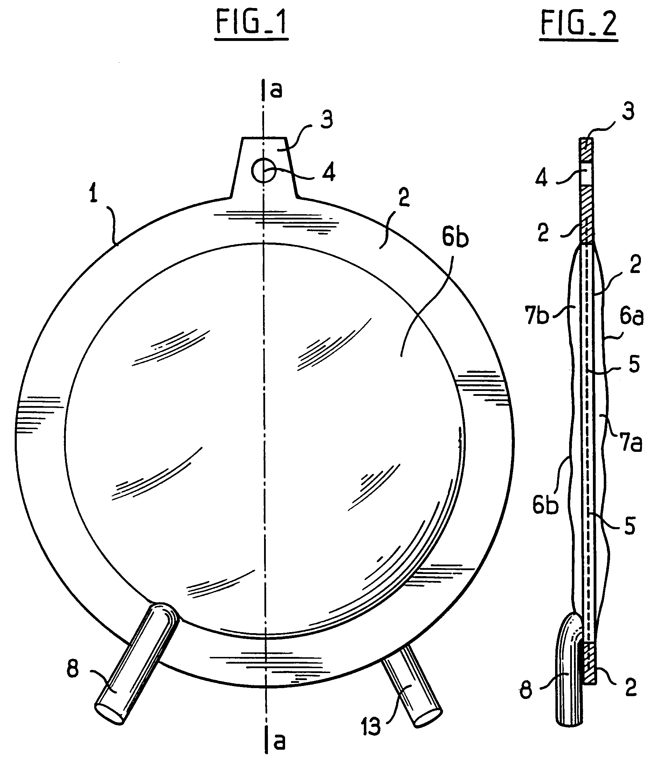

Un mode de réalisation équivalent est caractérisé par le fait que l'élément filtrant est sous la forme d'une feuille plane comportant une zone périphérique rigide permettant la rigidification de la surface filtrante par construction lors de la fabrication dudit élément filtrant, et que lesdites première et seconde parois sont scellées avec l'élément filtrant sur ladite zone périphérique rigide. Ce mode de réalisation peut être obtenu par exemple en utilisant un cadre, tel que celui défini ci-dessus, dans lequel la zone périphérique de l'élément filtrant est noyée. Un tel mode de réalisation, qui est illustré à la figure 2, peut être obtenu par moulage par injection du matériau du cadre de façon à noyer dans ledit matériau la zone périphérique de l'élément filtrant suffisamment tendu de façon que l'élément filtrant bordé par le cadre ainsi formé présente une surface filtrante plane. On peut envisager d'obtenir un mode de réalisation semblable en insérant l'élément filtrant entre deux cadres identiques en regard, les cadres étant tel que définis ci-dessus, de façon que la zone périphérique de l'élément filtrant soit emprisonnée entre les deux faces en regard des deux cadres, puis on assemble le tout par soudure à chaud sous une pression convenable. On obtient ainsi un dispositif dans lequel l'élément filtrant bordé par le cadre présente par construction une surface plane tendue et rigide.

Selon un autre mode de réalisation, le dispositif à poche filtrante est tel que la seconde paroi et l'élément filtrant sont réalisés chacun en un matériau souple, non rigidifié par construction, et ledit dispositif comprend des moyens permettant de rigidifier, par tension dans un plan, ledit élément filtrant. Un tel mode de réalisation fait également partie de l'invention.

On entend ici par matériau "souple" un matériau qui, sous forme de feuille, peut être par exemple plié, sans effort manuel notable, et sans se briser.

Les moyens pour rigidifier l'élément filtrant comprennent tous moyens permettant à l'élément filtrant d'adopter une forme plane, en assurant une tension de l'élément filtrant dans son plan. Ces moyens pour rigidifier l'élément filtrant comprennent au moins des moyens de fixation de la poche filtrante, disposée verticalement, par son extrémité supérieure, à un support approprié, la tension de l'élément filtrant dans son plan étant assurée au moins par les forces de pesanteur. Dans un mode de réalisation plus élaboré, les moyens pour rigidifier l'élément filtrant peuvent comprendre un carter rigide de surface sensiblement plane auquel la poche filtrante peut être fixée temporairement, de façon connue en soi, à l'aide de fixations amovibles, en assurant une tension de l'élément filtrant dans une ou plusieurs directions de son plan.

Pour que la filtration puisse être effectuée dans de bonnes conditions d'efficacité, il convient en particulier que le compartiment aval ait un volume qui ne soit pas sensiblement nul, comme déjà indiqué ci-dessus, de façon à pouvoir accueillir le filtrat avant son évacuation en continu vers l'extérieur. Autrement dit il faut éviter, au moins lors de l'utilisation du dispositif filtrant, que la surface filtrante soit entièrement en contact avec la seconde paroi. Pour cela, la seconde paroi peut être munie de moyens permettant d'écarter ladite seconde paroi de la surface filtrante ; par exemple, la réalisation d'un bourrelet au niveau de la zone de scellement périphérique peut contribuer à cet écartement ; on peut également munir la seconde paroi de moyens permettant de la tendre de façon à l'éloigner de l'élément filtrant.

Les moyens d'évacuation sont situés de préférence au voisinage de la périphérie de la poche filtrante et peuvent en particulier être voisins des moyens d'admission, qui sont eux-mêmes situés de préférence au voisinage de la périphérie.

Le dispositif à poche filtrante peut être réalisé sous la forme de poches multiples. En particulier, il peut comprendre en outre une poche souple destinée à recevoir le fluide biologique à filtrer, cette poche souple supplémentaire étant reliée ou apte à être reliée aux moyens d'admission par une tubulure, par exemple une tubulure souple.

Le dispositif peut comprendre également une autre poche souple destinée à recevoir le filtrat et reliée ou apte à être reliée aux moyens d'évacuation du filtrat par une tubulure analogue à la précédente.

L'invention concerne donc un procédé pour préparer un cryoprécipité utilisable comme colle biologique, à l'aide du dispositif à poche filtrante défini ci-dessus. Ce procédé est principalement caractérisé par le fait :
a) que l'on utilise un dispositif à poche filtrante tel que défini ci-dessus,
b) que l'on dispose ladite poche filtrante sur un support approprié de façon que ladite surface filtrante, rigide ou à l'état rigidifié, soit située dans un plan sensiblement vertical, lesdits moyens d'évacuation du filtrat étant situés au voisinage de la partie inférieure de la poche ainsi disposée,
c) que l'on relie lesdits moyens d'admission à une poche souple contenant ledit fluide biologique dans lequel ladite phase solide est en suspension, ladite poche souple étant disposée sur un support en une position plus élevée que la poche filtrante de façon que le fluide biologique qu'elle contient puisse d'écouler par gravité dans le compartiment amont,
d) que l'on met lesdits moyens d'évacuation en communication avec l'extérieur pour permettre l'évacuation du filtrat par gravité,
   - et que l'on obtient ainsi un cryoprécipité, sous la forme d'une phase solide retenue dans le compartiment amont. On peut alors recueillir le cryoprécipité.

Selon un mode de réalisation particulier, les moyens d'admission du fluide biologique sont situés également au voisinage de la partie inférieure de la poche filtrante disposée comme indiqué ci-dessus. Un tel arrangement permet de disposer, au-dessus du niveau du liquide dans le compartiment rétentat de la poche filtrante, d'une partie de surface filtrante non encore utilisée et donc à coup sûr non colmatée. Ainsi le colmatage de la surface filtrante n'est que progressif. Bien entendu, il est facile de donner à la surface filtrante des dimensions prédéterminées, ajustées de sorte qu'il reste toujours une partie de la surface non colmatée. Ces dimensions peuvent être déterminées, par de simples expériences de routine, en fonction du volume de fluide à filtrer.

On va maintenant décrire des modes de réalisation particuliers, non limitatifs, en faisant référence aux dessins annexés dans lesquels :
- la figure 1 représente une vue en élévation d'un mode de réalisation particulier de la poche filtrante de l'invention,
- la figure 2 est une représentation schématique en coupe selon a-a du dispositif de la figure 1,
- la figure 3 est une vue en élévation d'un autre mode de réalisation du dispositif filtrant,
- la figure 4 est une vue en coupe selon EF de la figure 3,
- la figure 5 est une vue en élévation d'un carter utilisé en association avec la poche filtrante de la figure 3,
- la figure 6 est une vue en coupe selon AB de la figure 5,
- la figure 7 est une vue en coupe selon CD de la figure 5.
- et la figure 8 est une représentation schématique du dispositif destiné à mettre en oeuvre le procédé de l'invention,

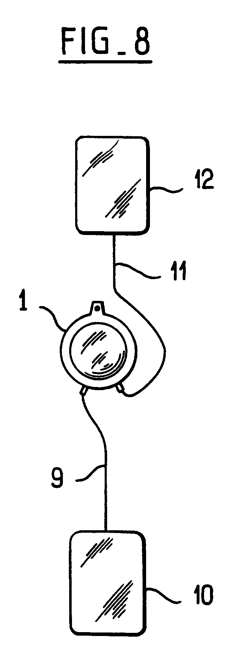

En faisant référence aux figures 1, 2 et 8, le dispositif filtrant 1 comprend un cadre rigide 2 constitué par une plaque ayant ici forme d'une couronne circulaire munie d'une languette 3 percée d'un trou 4 pour l'accrochage du dispositif à un support approprié. Le dispositif comprend un élément filtrant 5 (représenté par des traits interrompus sur la figure 2) dont la zone périphérique est noyée par construction au sein du matériau constituant le cadre 2.

Les parois 6a et 6b délimitent respectivement les compartiments amont 7a et aval 7b. Le compartiment aval est muni à sa périphérie d'un orifice de sortie ou embout 8, connectable à une tubulure 9 débouchant dans la poche souple 10 destinée à recueillir le filtrat.

Une tubulure d'admission 11 relie le dispositif filtrant à la poche souple 12 qui contient le liquide à filtrer. La tubulure 11 est connectée à l'orifice d'entrée (embout 13) qui débouche à la périphérie du compartiment amont délimité par l'élément filtrant 5 et la paroi souple 6a.

Le cadre 2 peut être réalisé en tout matériau classique, rigide à température ambiante, tel que le polychlorure de vinyle, le polypropylène ou le polycarbonate.

L'élément filtrant 5 comprend par exemple une toile de nylon tissée.

Les parois souples 6a et 6b sont réalisées par exemple sous la forme d'un film de polyéthylène ou de polychlorure de vinyle (PVC).

La forme extérieure du dispositif filtrant, dans le plan de l'élément filtrant, peut être circulaire (comme à la figure 1, avec par exemple un diamètre externe de 85 mm, l'évidement central délimité par le cadre 2 ayant un diamètre de 75 mm), ovale ou rectangulaire. L'élément filtrant, de forme circulaire et ayant les dimensions du disque externe du cadre 2, est découpé dans une toile à bluter en nylon tissé, de diamètre de pores égal à 25 micromètres environ. On obtient un élément filtrant rigidifié en effectuant un moulage par injection du matériau du cadre de façon à noyer dans ledit matériau la zone périphérique de l'élément filtrant. Le cadre 2 ainsi formé autour de l'élément filtrant a une épaisseur de 4 mm. Les parois 6a et 6b, de forme et de dimension identiques, sont découpées dans un film de PVC ayant une épaisseur de 0,3 mm. L'élément filtrant muni de son cadre et les parois sont juxtaposés (comme montré à la figure 2) et assemblés par soudure à la chaleur sur l'ensemble de leur zone périphérique à l'exception de l'emplacement des embouts 8 et 13. L'embout 8, inséré entre le film de PVC 6b et le cadre, est soudé à ces derniers. L'ensemble ainsi obtenu est collé ou soudé. On opère de façon analogue avec l'embout 13 et le film 6a.

Dans une opération de filtration d'un cryoprécipité, on a recueilli environ 400 ml de sang dans un système de poches souples classique multipoches (Maco-Pharma, Tourcoing, France) comprenant trois poches. Par centrifugation à 2500 tours par minute à 18°C pendant 20 minutes, on sépare le plasma sanguin qui est transféré de façon connue en soi dans l'une des poches du système multipoches. On sépare la poche dans laquelle ont été recueillis les érythrocytes. On obtient alors un système à deux poches reliées par une tubulure, l'une des poches 12 contenant le plasma, et l'autre étant vide. La tubulure 11 entre les deux poches est obturée, par exemple par pinçage. L'ensemble des deux poches est placé dans une enceinte de congélation, à une température de -20°C, pendant 24 heures. Le plasma est ensuite décongelé, à une température de + 3°C pendant 72 h. On observe la présence d'un cryoprécipité en suspension dans le plasma liquide. La poche 12 contenant le plasma et le cryoprécipité est connectée avec 11 le dispositif filtrant 1, la connexion pouvant être effectuée à l'aide d'une tubulure munie d'un trocart destiné à s'insérer dans la poche 12. On peut également effectuer la connexion à l'aide d'un appareil à connexion stérile, tel que celui de type SCD 2B (marque de commerce) commercialisé par Terumo. On dispose la poche souple 12, à l'aide d'un support non représenté, en une position située au-dessus de celle occupée par le dispositif de filtration 1, lui-même fixé sur un support approprié, tandis que la poche 10, destinée à recueillir le filtrat, est disposée en-dessous du niveau du dispositif filtrant 1. L'ensemble du système est maintenu à une température de l'ordre de 4°C. La tubulure 11 qui avait été obstruée par pinçage est libérée. Le liquide contenu dans la poche 12 s'écoule par gravité, débouche dans le compartiment amont du dispositif filtrant 1. Après traversée du filtre, le filtrat arrive dans le compartiment aval du dispositif filtrant 1 et s'écoule par gravité dans la poche 10 via la tubulure 9. En cas de besoin, la filtration peut être amorcée en exerçant une pression sur la poche 12, par exemple manuellement. Le débit peut être régulé par exemple par pincement partiel de la tubulure 11. On constate en fin de filtration que les parois souples s'appliquent contre la surface filtrante, ce qui facilite un essorage efficace du cryoprécipité qui est retenu dans le compartiment amont.

A ce stade, il est possible de séparer le dispositif filtrant 1 des poches 10 et 12, par exemple par soudage puis découpage des tubulures 9 et 11 au voisinage de leur raccordement avec le dispositif 1. Le dispositif filtrant 1 contenant le cryoprécipité peut, si désiré, être conservé dans une chambre de congélation, en attendant son utilisation. Au moment de l'utilisation, le cryoprécipité peut être recueilli par exemple en immergeant le dispositif filtrant dans un bain marie à 37°C pendant 10 minutes environ. Le cryoprécipité est alors sous forme liquide et peut être recueilli par exemple à l'aide d'une seringue connectée au site de prélèvement prévu qui peut déboucher aussi bien dans le compartiment amont que dans le compartiment aval : il peut s'agir par exemple de l'orifice 8 ou 13. Le cryoprécipité aspiré dans la seringue peut alors être utilisé par exemple comme colle biologique. On peut dans ce cas le mélanger, directement sur le site opératoire à traiter, avec une solution de thrombine en présence d'ions calcium.

Lors de la filtration, réalisée à l'aide de ce montage, de 450 ml de plasma décongelé, il a été possible de récupérer 4 g de cryoprécipité. La filtration a duré environ trois heures.

En variante, il est possible d'effectuer la filtration alors que le plasma n'est pas encore entièrement décongelé, la filtration se produisant au fur et à mesure de la décongélation. Bien entendu, pendant la filtration, l'ensemble du système doit être maintenu à une température à laquelle le cryoprécipité ne se liquéfie pas.

Les tubulures 9 et 11 ont un diamètre de 2,7 mm.

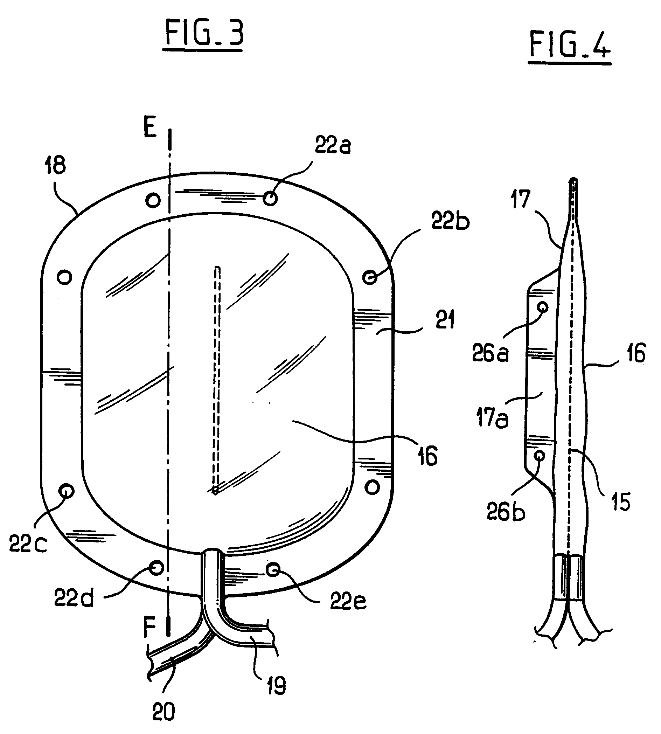

On va maintenant décrire, en faisant référence aux figures 3 à 7, un second mode de réalisation dans lequel le dispositif filtrant est réalisé par la juxtaposition de matériaux en feuilles souples. Le dispositif filtrant 18 est constitué par la juxtaposition des feuilles souples 16, 15 et 17, suivie de leur soudage à la périphérie, sauf dans les zones où débouchent les orifices d'entrée 19 et de sortie 20. La zone périphérique de soudage 21 est munie de perforations 22a, 22b, 22c, 22d, 22e, etc. Dans ce second mode de réalisation, l'élément filtrant peut être encore une toile tissée, par exemple une toile de nylon 15, et les deux parois amont 16 et aval 17 sont toutes deux réalisées en un film souple, par exemple de PVC.

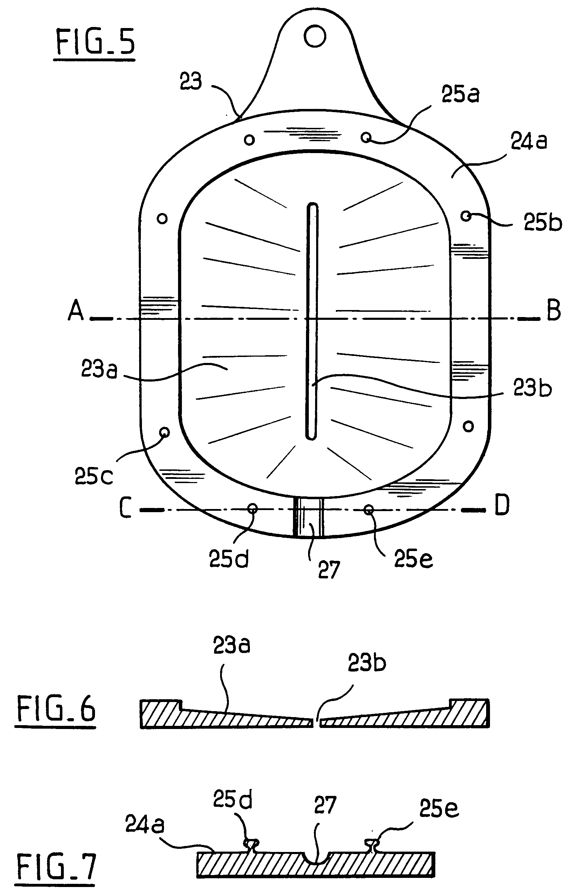

Ce dispositif filtrant souple peut être utilisé par exemple avec un carter rigide permettant de rigidifier l'élément filtrant dans un plan. On peut utiliser par exemple le carter 23 représenté à la figure 5, qui peut être réalisé en métal ou en matière plastique rigide, par exemple une matière plastique transparente telle qu'un polycarbonate, polypropylène ou polyéthylène.

Ce carter 23, dont la face interne 23a est destinée à être en regard de la paroi aval 17 du dispositif filtrant, comporte une partie périphérique 24 dont la face interne 24a est munie d'ergots 25a, 25b, 25c, 25d, 25e, etc. disposés de façon à correspondre respectivement aux perforations 22a, 22b, 22c, 22d, 22e, etc. de la zone périphérique du dispositif filtrant. Ainsi, en engageant lesdites perforations dans les ergots correspondants, il est possible de tendre dans un plan (correspondant sensiblement au plan du dessin de la figure 5) l'élément filtrant 15. Par ailleurs, comme on le voit sur la figure 6, la face interne 23a du carter est légèrement oblique par rapport au plan principal du carter, depuis la périphérie vers la zone centrale, et délimite une partie creuse qui permet d'éviter que la paroi 17 soit au contact de l'élément filtrant 15. Pour cela, on peut par exemple munir la paroi 17 d'une languette 17a qui sera disposée de façon à traverser la fente axiale 23b prévue sur le carter. On peut par exemple tendre la paroi 17 à l'aide de la languette 17a et maintenir celle-ci dans une position correspondant à une tension de la paroi 17 par des moyens appropriés. La paroi 17 se trouve ainsi écartée de l'élément filtrant 15.

La languette 17a, par exemple en feuille plastique souple, peut être notamment soudée selon l'axe de symétrie vertical de la paroi 17. La partie de la languette située à l'extérieur après traversée de la fente 23b peut être par exemple munie de perforations 26a et 26b destinées à accrocher des dispositifs tenseurs sur des ergots appropriés, non représentés, prévus sur la face externe du carter. La base du carter comporte une rainure 27 formant un logement pour l'extrémité de la tubulure aval 20.

Les dimensions du dispositif sont par exemple les suivantes :
Poches filtrantes et carters : largeur 85 mm, longueur 100 mm,
Largeur de la zone de soudage : 10 mm.
Il en résulte une surface filtrante légèrement supérieure à 45 cm².
Tubulure amont : longueur 1 mètre ; diamètre interne 2,7 mm, identique à celle des tubulures usuelles de systèmes de recueil de sang, pour permettre la réalisation de connexion stérile avec les poches classiques de recueil du sang et de plasma. Elle comporte à son extrémité inférieure une section de diamètre interne 3,2 mm.
Tubulure aval : longueur 2 mètres ; diamètre interne 3,2 mm. Cette tubulure aval est reliée à son extrémité à une poche de transfert de 400 ml non représentée.

Il convient de noter enfin qu'il est possible d'introduire dans le compartiment rétentat un agent favorisant l'activation du facteur XII de coagulation, comme par exemple le kaolin en poudre. Le cryoprécipité obtenu est alors pré-activé par contact avec le kaolin et peut être conservé dans cet état après séparation du kaolin. Au moment de l'utilisation, il suffira alors d'ajouter une solution contenant des ions calcium pour provoquer la coagulation, en vue d'une utilisation comme colle biologique.

## Revendications

1. Procédé pour préparer un cryoprécipité utilisable connue colle biologique, au départ d'une suspension dudit cryoprécipité dans un fluide biologique, à l'aide d'un dispositif à poche filtrante, caractérisé par le fait :
a) que l'on utilise un dispositif à poche filtrante comprenant :
- une poche formée essentiellement d'une première paroi (6a) et d'une seconde paroi (6b) en regard, constituées chacune par un film souple, imperméables aux fluides et scellées de façon étanche dans une zone de scellement (2) à leur périphérie, de façon à délimiter un espace interne entre les deux parois en regard,
- des moyens de filtration situés à l'intérieur de ladite poche, capables de retenir ledit cryoprécipité, tout en laissant passer un filtrat, lesdits moyens de filtration étant constitués par au moins un élément filtrant (5), autre qu'un filtre d'épaisseur, en forme de feuille, dont au moins une partie de la surface est une surface filtrante, ladite feuille étant disposée entre lesdites première et seconde parois et séparant, dans ledit espace interne, deux compartiments, respectivement amont et aval, (7a et 7b) délimités chacun par l'une des faces de ladite feuille et par la face interne en regard de l'une desdites parois, de façon qu'un fluide présent dans l'un desdits compartiments ne puisse accéder à l'autre compartiment qu'en passant à travers ladite surface filtrante,
- des moyens d'admission (13) dudit fluide biologique depuis une source extérieure vers l'intérieur de ladite poche, lesdits moyens d'admission débouchant dans le compartiment amont,
- et des moyens d'évacuation (8) vers l'extérieur dudit filtrat et dudit rétentat, lesdits moyens d'évacuation permettant d'évacuer le filtrat depuis le compartiment aval vers l'extérieur, et étant situés au voisinage de la périphérie de ladite poche filtrante,
ladite surface filtrante étant une surface rigide ou pouvant être rigidifiée, ledit dispositif comprenant en outre, dans ce dernier cas, des moyens pour rigidifier ladite surface filtrante, et ladite surface filtrante présentant des pores de diamètre compris dans la gamme de 10-75 micromètres,
b) que l'on dispose ladite poche filtrante sur un support approprié de façon que ladite surface filtrante, rigide ou à l'état rigidifié, soit située dans un plan vertical, lesdits moyens d'évacuation du filtrat étant situés au voisinage de la partie inférieure de la poche ainsi disposée,
c) que l'on relie lesdits moyens d'admission à une poche souple contenant ledit fluide biologique, dans lequel ladite phase solide est en suspension, ladite poche souple étant disposée sur un support en une position plus élevée que la poche filtrante de façon que le fluide biologique qu'elle contient puisse s'écouler par gravité dans le compartiment amont,
d) que l'on met lesdits moyens d'évacuation en communication avec l'extérieur pour permettre l'évacuation du filtrat par gravité, et que l'on obtient ainsi un cryoprécipité, sous la forme d'une phase solide, retenu dans le compartiment amont.

2. Procédé selon la revendication 1, caractérisé par le fait qu'en outre, on recueille le cryoprécipité retenu dans le compartiment amont.

3. Procédé selon la revendication 2, caractérisé par le fait que pour recueillir le cryoprécipité, on chauffe le dispositif filtrant pour que le cryoprécipité soit sous forme liquide, et on prélève ledit liquide.

4. Procédé selon l'une quelconque des revendications 1 à 3, caractérisé par le fait qu'à l'étape a) on utilise un dispositif qui comprend un cadre rigide (2) correspondant à ladite zone de scellement périphérique.

5. Procédé selon l'une quelconque des revendications 1 à 4, caractérisé par le fait qu'à l'étape a) on utilise un dispositif tel :
- que l'élément filtrant est sous la forme d'une feuille plane (5) qui comporte une zone périphérique rigide (2) permettant la rigidification de la surface filtrante par construction lors de la fabrication dudit élément filtrant,
- et que lesdites première et seconde parois sont scellées sur ladite zone périphérique rigide.

6. Procédé selon l'une quelconque des revendications 1 à 3, caractérisé par le fait qu'à l'étape a) on utilise un dispositif tel que la seconde paroi et l'élément filtrant sont réalisés chacun en un matériau souple, et que ledit dispositif comprend des moyens (22a, 22b, ..., 25a, 25b, ...) permettant de rigidifier, par tension dans un plan, ledit élément filtrant.

7. Procédé selon la revendication 6, caractérisé par le fait que lesdits moyens pour rigidifier l'élément filtrant comprennent un carter rigide (23) auquel la poche filtrante peut être fixée temporairement en assurant une tension de l'élément filtrant dans son plan.

8. Procédé selon la revendication 6 ou 7, caractérisé par le fait que ledit dispositif comprend en outre des moyens (17a, 23b) permettant d'écarter ladite seconde paroi de la surface filtrante.

9. Procédé selon l'une quelconque des revendications précédentes, caractérisé par le fait qu'à l'étape a) on utilise un dispositif tel que lesdits moyens d'évacuation sont situés au voisinage de la périphérie de la poche filtrante, et sont voisins desdits moyens d'admission.

10. Procédé selon l'une quelconque des revendications précédentes, caractérisé par le fait qu'à l'étape a) on utilise un dispositif qui comprend en outre une poche souple (12) destinée à recevoir ledit fluide biologique à filtre, ladite poche étant reliée auxdits moyens d'admission par une tubulure (11).

11. Procédé selon l'une quelconque des revendications précédentes, caractérisé par le fait qu'à l'étape a) on utilise un dispositif qui comprend en outre une poche souple (10) destinée à recevoir le filtrat, et reliée auxdits moyens d'évacuation du filtrat par une tubulure (9).

12. Procédé selon l'une quelconque des revendications précédentes, caractérisé par le fait que lesdits moyens d'admission du fluide biologique sont situés au voisinage de la partie inférieure de ladite poche ainsi disposée.

13. Dispositif à poche filtrante permettant le mise en oeuvre du procédé de la revendication 1, le dispositif comprenant :
- une poche formée essentiellement d'une première paroi (6a) et d'une seconde paroi (6b) en regard, constituées chacune par un film souple, imperméables aux fluides et scellées de façon étanche dans une zone de scellement (2) à leur périphérie, de façon à délimiter un espace interne entre les deux parois en regard,
- des moyens de filtration situés à l'intérieur de ladite poche, capables de retenir ledit cryoprécipité, tout en laissant passer un filtrat, lesdits moyens de filtration étant constitués par au moins un élément filtrant (5), autre qu'un filtre d'épaisseur, en forme de feuille, dont au moins une partie de la surface est une surface filtrante, ladite feuille étant disposée entre lesdites première et seconde parois et séparant, dans ledit espace interne, deux compartiments, respectivement amont et aval, (7a et 7b) délimités chacun par l'une des faces de ladite feuille et par la face interne en regard de l'une desdites parois, de façon qu'un fluide présent dans l'un desdits compartiments ne puisse accéder à l'autre compartiment qu'en passant à travers ladite surface filtrante,
- des moyens d'admission (13) dudit fluide biologique depuis une source extérieure vers l'intérieur de ladite poche, lesdits moyens d'admission débouchant dans le compartiment amont,
- et des moyens d'évacuation (8) vers l'extérieur dudit filtrat et dudit rétentat, lesdits moyens d'évacuation permettant d'évacuer le filtrat depuis le compartiment aval vers l'extérieur, et étant situés au voisinage de la périphérie de ladite poche filtrante,
ladite surface filtrante étant une surface rigide ou pouvant être rigidifiée, ledit dispositif comprenant en outre, dans ce dernier cas, des moyens pour rigidifier ladite surface filtrante, et ladite surface filtrante présentant des pores de diamètre compris dans la gamme de 10-75 micromètres, le dispositif étant soit (a) tel :
- que l'élément filtrant est sous la forme d'une feuille plane (5) qui comporte une zone périphérique rigide (2) permettant la rigidification de la surface filtrante par construction lors de la fabrication dudit élément filtrant,
- et que lesdites première et seconde parois sont scellées sur ladite zone périphérique rigide, soit (b) tel :
que la seconde paroi et l'élément filtrant sont réalisés chacun en un matériau souple, et que ledit dispositif comprend des moyens (22a, 22b, ..., 25a, 25b, ...) permettant de rigidifier, par tension dans un plan, ledit élément filtrant,
lesdits moyens pour rigidifier l'élément filtrant comprennent un carter rigide (23) auquel la poche filtrante peut être fixée temporairement en assurant une tension de l'élément filtrant dans son plan.

14. Dispositif selon le revendication précédente, caractérisé par le fait que lesdits moyens d'évacuation sont situés au voisinage de la périphérie de la poche filtrante, et sont voisins desdits moyens d'admission.

15. Dispositif selon l'une quelconque des revendications précédentes, caractérisé par le fait que le dispositif comprend en outre une poche souple (12) destinée à recevoir ledit fluide biologique à filtre, ladite poche étant reliée auxdits moyens d'admission par une tubulure (11).

16. Dispositif selon l'une quelconque des revendications précédentes, caractérisé par le fait que le dispositif comprend en outre une poche souple (10) destinée à recevoir le filtrat, et reliée auxdits moyens d'évacuation du filtrat par une tubulure (9).

## Claims

1. Process for preparing a cryoprecipitate, which can be used as a biological adhesive, starting from a suspension of the said cryoprecipitate in a biological fluid, with the aid of a device with filter bag, characterised in that:
a) a device with filter bag is used comprising:
- a bag formed essentially by a first wall (6a) and by an opposite second wall (6b) which are each made of a flexible film and are impermeable to the fluids and are sealed in a leaktight manner in a sealing zone (2) on their periphery, in such a way as to define an internal space between the two opposite walls,
- filtration means which are situated inside the said bag and are capable of holding back the said cryoprecipitate, while permitting passage of a filtrate, the said filtration means being formed by at least one sheet-shaped filtering element (5), other than a thickness filter, of which at least one part of the surface is a filtering surface, the said sheet being disposed between the said first and second walls and separating two compartments within the said internal space, namely an upstream compartment (7a) and a downstream compartment (7b), which are each defined by one of the faces of the said sheet and by the opposite inner face of one of the said walls, in such a way that a fluid present in one of the said compartments can gain access to the other compartment only by passing through the said filtering surface,
- means (13) for admitting the said biological fluid from an external source to the inside of the said bag, the said admission means opening out into the upstream compartment,
- and means (8) for evacuating the said filtrate and the said retentate to the outside, the said evacuation means permitting evacuation of the filtrate from the downstream compartment to the outside and being situated in proximity to the periphery of the said filter bag,
the said filtering surface being a rigid surface or a surface which can be rigidified, the said device additionally comprising, in the latter case, means for rigidifying the said filtering surface, and the said filtering surface having pores with a diameter ranging from 10-75 micrometres,
b) the said filter bag is disposed on a suitable support in such a way that the said filtering surface, which is rigid or in the rigidified state, is situated in a vertical plane, the said filtrate evacuation means being situated in proximity to the lower part of the bag disposed in this way,
c) the said admission means are connected to a flexible bag containing the said biological fluid in which the said solid phase is in suspension, the said flexible bag being disposed on a support at a position higher up than the filter bag, in such a way that the biological fluid which it contains can flow by gravity into the upstream compartment,
d) the said evacuation means are brought into communication with the outside in order to permit evacuation of the filtrate by gravity, and a cryoprecipitate is thus obtained which is in the form of a solid phase and which is retained in the upstream compartment.

2. Process according to Claim 1, characterized in that the cryoprecipitate retained is additionally recovered from the upstream compartment.

3. Process according to Claim 2, characterized in that, in order to recover the cryoprecipitate, the filtering device is heated so that the cryoprecipitate is in liquid form, and the said liquid is removed.

4. Process according to any one of Claims 1 to 3, characterized in that at step a) a device is used which comprises a rigid frame (2) corresponding to the said peripheral sealing zone.

5. Process according to any one of Claims 1 to 4, characterized in that at step a) a device is used which is such that:
- the filtering element is in the form of a flat sheet (5) which includes a rigid peripheral zone (2) which makes it possible to rigidify the filtering surface upon construction during the manufacture of the said filtering element,
- and the said first and second walls are sealed on the said rigid peripheral zone.

6. Process according to any one of Claims 1 to 3, characterized in that at step a) a device is used which is such that the second wall and the filtering element are each made of a flexible material, and that the said device comprises means (22a, 22b, ..., 25a, 25b, ...) making it possible to rigidify the said filtering element by tensioning in one plane.

7. Process according to Claim 6, characterized in that the said means for rigidifying the filtering element comprise a rigid casing (23) to which the filter bag can be fixed temporarily, thereby effecting a tensioning of the filtering element in its plane.

8. Process according to Claim 6 or 7, characterized in that the said device additionally comprises means (17a, 23b) which permit the said second wall to be distanced from the filtering surface.

9. Process according to any one of the preceding claims, characterized in that at step a) a device is used which is such that the said evacuation means are situated in proximity to the periphery of the filter bag and are near the said admission means.

10. Process according to any one of the preceding claims, characterized in that at step a) a device is used which additionally comprises a flexible bag (12) intended to receive the said biological fluid to be filtered, the said bag being connected to the said admission means by way of tubing (11).

11. Process according to any one of the preceding claims, characterized in that at step a) a device is used which additionally comprises a flexible bag (10) which is intended to receive the filtrate and which is connected to the said filtrate evacuation means by way of tubing (9).

12. Process according to any one of the preceding claims, characterized in that the said means for admission of the biological fluid are situated in proximity to the lower part of the said bag disposed in this way.

13. Device with filter bag permitting the implementation of the process of Claim 1, the device comprising:
- a bag formed essentially by a first wall (6a) and by an opposite second wall (6b) which are each made of a flexible film and are impermeable to the fluids and are sealed in a leaktight manner in a sealing zone (2) on their periphery, in such a way as to define an internal space between the two opposite walls,
- filtration means which are situated inside the said bag and are capable of holding back the said cryoprecipitate, while permitting passage of a filtrate, the said filtration means being formed by at least one sheet-shaped filtering element (5), other than a thickness filter, of which at least one part of the surface is a filtering surface, the said sheet being disposed between the said first and second walls and separating two compartments within the said internal space, namely an upstream compartment (7a) and a downstream compartment (7b), which are each defined by one of the faces of the said sheet and by the opposite inner face of one of the said walls, in such a way that a fluid present in one of the said compartments can gain access to the other compartment only by passing through the said filtering surface,
- means (13) for admitting the said biological fluid from an external source to the inside of the said bag, the said admission means opening out into the upstream compartment,
- and means (8) for evacuating the said filtrate and the said retentate to the outside, the said evacuation means permitting evacuation of the filtrate from the downstream compartment to the outside and being situated in proximity to the periphery of the said filter bag,
the said filtering surface being a rigid surface or a surface which can be rigidified, the said device additionally comprising, in the latter case, means for rigidifying the said filtering surface, and the said filtering surface having pores with a diameter ranging from 10-75 micrometres, the device being either (a) such that:
- the filtering element is in the form of a flat sheet (5) which includes a rigid peripheral zone (2) which makes it possible to rigidify the filtering surface upon construction during the manufacture of the said filtering element,
- and the said first and second walls are sealed on the said rigid peripheral zone, or (b) such that the second wall and the filtering element are each made of a flexible material, and that the said device comprises means (22a, 22b, ..., 25a, 25b, ...) making it possible to rigidify the said filtering element by tensioning in one plane,
the said means for rigidifying the filtering element comprise a rigid casing (23) to which the filter bag can be fixed temporarily, thereby effecting a tensioning of the filtering element in its plane.

14. Device according to the preceding claim, characterized in that the said evacuation means are situated in proximity to the periphery of the filter bag and are near the said admission means.

15. Device according to any one of the preceding claims, characterized in that the device additionally comprises a flexible bag (12) intended to receive the said biological fluid to be filtered, the said bag being connected to the said admission means by way of tubing (11).

16. Device according to any one of the preceding claims, characterized in that the device additionally comprises a flexible bag (10) which is intended to receive the filtrate and which is connected to the said filtrate evacuation means by way of tubing (9).

## Patentansprüche

1. Verfahren zum Herstellen eines Tieftemperatur-Niederschlags, der als biologischer Kleber benutzbar ist, aus einer Suspension des genannten Tieftemperatur-Niederschlags in einem biologischen Fluid mit Hilfe einer Vorrichtung mit Filterbeutel, dadurch gekennzeichnet,
a) daß man eine Vorrichtung mit Filterbeutel benutzt, mit den folgenden Merkmalen:
- ein Beutel, der im wesentlichen aus einer ersten Wand (6a) und einer gegenüberliegenden zweiten Wand (6b) gebildet ist, die jeweils aus einer weichen Folie gebildet sind, für Fluide undurchlässig sind und in einer Vergußzone (2) an ihrem Umfang derart dicht vergossen sind, daß ein Innenraum zwischen den beiden gegenüberliegenden Wänden abgegrenzt ist,
- Filtermittel, die im Inneren des genannten Beutels gelegen sind und imstande sind, den genannten Tieftemperatur-Niederschlag zurückzuhalten, während sie gleichzeitig ein Filtrat hindurchlassen, wobei die genannten Filtermittel aus mindestens einem filtrierenden Element (5) gebildet sind, das kein Stärken- bzw. Größen-Filter ist, in Form eines Blatts bzw. eines Bogens, von dem mindestens ein Abschnitt der Oberfläche eine filtrierende Oberfläche ist, wobei der genannte Bogen zwischen der genannten ersten und zweiten Wand angeordnet ist und im genannten Innenraum zwei Abteile voneinander trennt, und zwar ein stromaufwärts bzw. ein stromabwärts gelegenes Abteil (7a und 7b), die jeweils durch eine der Stirnflächen des genannten Bogens und durch die gegenüberliegende Innenfläche einer der genannten Wände derart begrenzt ist, daß ein Fluid, das in einem der genannten Abteile vorliegt, zum anderen Abteil nur dadurch gelangen kann, daß es durch die genannte filtrierende Oberfläche hindurchtritt,
- Einlaßmittel (13) für das genannte, biologische Fluid von einer äußeren Quelle her zur Innenseite der genannten Tasche hin, wobei die genannten Einlaßmittel in das stromaufwärts gelegene Abteil einmünden, und
- Mittel (8) zur Entleerung des genannten Filtrats und des Retentats nach außen, wobei die genannten Entleerungsmittel es gestatten, das Filtrat aus dem stromabwärts gelegenen Abteil nach außen zu entleeren, und in der Nähe des Umfangs des genannten filtrierenden Beutels gelegen sind,
- wobei die genannte filtrierende Oberfläche eine steife Oberfläche ist oder ausgesteift sein kann, wobei die genannte Vorrichtung außerdem in diesem letztgenannten Fall Mittel zum Aussteifen der genannten filtrierenden Oberfläche aufweist, und wobei die genannte filtrierende Oberfläche Poren mit einem Durchmesser aufweist, die im Bereich von 10 bis 75 Mikrometern liegen,
b) daß man den genannten, filtrierenden Beutel auf einem geeigneten Träger derart anordnet, daß die genannte filtrierende Oberfläche, die steif ist oder sich in ausgesteiftem Zustand befindet, in einer vertikalen Ebene gelegen ist, wobei die genannten Entleerungsmittel für das Filtrat in der Nähe des unteren Abschnitts des so angeordneten Beutels befindlich sind,
c) daß man die genannten Einlaßmittel an einen weichen Beutel anschließt, der das genannte biologische Fluid enthält, worin sich die genannte feste Phase in Suspension befindet, wobei der genannte weiche Beutel auf einem Träger in einer Lage angeordnet ist, die derart höher liegt als der filtrierende Beutel, daß das biologische Fluid, das er enthält, durch Schwerkraft in das stromaufwärts gelegene Abteil auslaufen kann, und
d) daß man die genannten Entleerungsmittel in Verbindung mit der Außenseite setzt, um die Entleerung des Filtrats durch Schwerkraft zu gestatten, und daß man so einen Tieftemperatur-Niederschlag in Form einer festen Phase erhält, der im stromaufwärts gelegenen Abteil zurückgehalten wurde.

2. Verfahren nach Anspruch 1, dadurch gekennzeichnet, daß man außerdem den Tieftemperatur-Niederschlag, der im stromaufwärts gelegenen Abschnitt zurückgehalten wurde, auffängt.

3. Verfahren nach Anspruch 2, dadurch gekennzeichnet, daß man zum Auffangen des Tieftemperatur-Niederschlags die filtrierende Vorrichtung erwärmt, damit der Tieftemperatur-Niederschlag in flüssiger Form vorliegt, und man die genannte Flüssigkeit abzapft.

4. Verfahren nach irgendeinem der Ansprüche 1 bis 3, dadurch gekennzeichnet, daß man in dem Schritt a) eine Vorrichtung benutzt, die einen starten Rahmen (2) aufweist, der der Umfangs-Vergußzone entspricht.

5. Verfahren nach irgendeinem der Ansprüche 1 bis 4, dadurch gekennzeichnet, daß man beim Schritt a) eine solche Vorrichtung benutzt, daß
- das filtrierende Element in Form eines ebenen Bogens (5) vorliegt, der eine steife Umfangszone (2) aufweist, die die Aussteifung der filtrierenden Oberfläche durch den Aufbau des genannten filtrierenden Elements bei der Herstellung gestattet, und
- die genannte erste und zweite Wand auf der genannten steifen Umfangszone vergossen sind.

6. Verfahren nach irgendeinem der Ansprüche 1 bis 3, dadurch gekennzeichnet, daß man im Schritt a) eine solche Vorrichtung benutzt, daß die zweite Wand und ein filtrierendes Element jeweils aus einem weichen Material hergestellt sind, und daß die genannte Vorrichtung Mittel (22a, 22b, ..., 25a, 25b, ...) aufweist, die es gestatten, durch Zugspannung in einer Ebene das genannte filtrierende Element auszusteifen.

7. Verfahren nach Anspruch 6, dadurch gekennzeichnet, daß die genannten Mittel zum Aussteifen des filtrierenden Elements einen steifen Kasten (23) aufweisen, an dem der filtrierende Beutel zeitweise befestigt werden kann, wobei man eine Zugspannung des filtrierenden Elements in seiner Ebene sicherstellt.

8. Verfahren nach Anspruch 6 oder 7, dadurch gekennzeichnet, daß die genannte Vorrichtung außerdem Mittel (17a, 23b) aufweist, die es gestatten, die genannte zweite Wand von der filtrierenden Oberfläche abzuspreizen.

9. Verfahren nach irgendeinem der vorangehenden Ansprüche, dadurch gekennzeichnet, daß man in dem Schritt a) eine solche Vorrichtung benutzt, daß die genannten Entleerungsmittel in der Nähe des Umfangs des filtrierenden Beutels gelegen sind und den genannten Einlaßmitteln benachbart sind.

10. Verfahren nach irgendeinem der vorangehenden Ansprüche, dadurch gekennzeichnet, daß man im Schritt a) eine Vorrichtung benutzt, die außerdem einen weichen Beutel (12) aufweist, der dazu bestimmt ist, das genannte, zu filtrierende, biologische Fluid aufzunehmen, wobei der genannte Beutel mit den genannten Einlaßmitteln durch eine Rohr- bzw. Schlauchleitung (11) verbunden ist.

11. Verfahren nach irgendeinem der vorangehenden Ansprüche, dadurch gekennzeichnet, daß man im Schritt a) eine Vorrichtung benutzt, die außerdem einen weichen Beutel (10) aufweist, der dazu bestimmt ist, das Filtrat aufzunehmen, und mit den genannten Mitteln zur Entleerung des Filtrats durch eine Rohr- bzw. Schlauchleitung (9) verbunden ist.

12. Verfahren nach irgendeinem der vorangehenden Ansprüche, dadurch gekennzeichnet, daß die genannten Einlaßmittel für das biologische Fluid in der Nähe des unteren Abschnitts des so angeordneten Beutels gelegen sind.

13. Vorrichtung mit Filterbeutel, die die Durchführung des Verfahrens des Anspruchs 1 gestattet, wobei die Vorrichtung die folgenden Merkmale aufweist:
- ein Beutel, der im wesentlichen aus einer ersten Wand (6a) und einer zweiten, gegenüberliegenden Wand (6b) gebildet ist, die jeweils von einer weichen Folie gebildet sind, die für Fluide undurchlässig ist, und dicht in einer Vergußzone (2) an ihrem Umfang derart vergossen sind, daß ein Innenraum zwischen den beiden gegenüberliegenden Wänden abgegrenzt ist,
- Filtermittel, die im Inneren des genannten Beutels gelegen sind und imstande sind, den genannten Tieftemperatur-Niederschlag zurückzuhalten, während sie ein Filtrat hindurchtreten lassen, wobei die genannten Filtermittel von mindestens einem filtrierenden Element (5) gebildet sind, das nicht als Stärken- bzw. Größen-Filter wirkt, in Form eines Blattes bzw. eines Bogens, von dem mindestens ein Abschnitt der Oberfläche eine filtrierende Fläche ist, wobei der genannte Bogen zwischen der genannten ersten und zweiten Wand angeordnet ist und im genannten Innenraum zwei Abteile abtrennt, und zwar jeweils ein stromaufwärts gelegenes und ein stromabwärts gelegenes Abteil (7a und 7b), die jeweils von einer der Stirnflächen des genannten Bogens und von der gegenüberliegenden Innenfläche einer der genannten Wände derart begrenzt sind, daß ein Fluid, das in einem der genannten Abteile vorliegt, zum anderen Teil nur dadurch gelangen kann, daß es die genannte filtrierende Oberfläche durchdringt,
- Einlaßmittel (13) für das genannte biologische Fluid von einer außenliegenden Quelle her in das innere des genannten Beutels, wobei die genannten Einlaßmittel im stromaufwärts gelegenen Abteil einmünden, und
- Mittel (8) zum Entleeren des genannten Filtrats und des Retentats nach außen, wobei die genannten Entleerungsmittel es gestatten, das Filtrat vom stromabwärts gelegenen Abteil nach außen zu entleeren, und in der Nähe des Umfangs des genannten filtrierenden Beutels gelegen sind,
wobei die genannte filtrierende Oberfläche eine steife Oberfläche ist oder ausgesteift werden kann, und die genannte Vorrichtung außerdem in diesem letzten Fall Mittel zum Aussteifen der genannten filtrierenden Oberfläche aufweist, und wobei die genannte filtrierende Oberfläche Poren mit einem Durchmesser darbietet, der im Bereich von 10 bis 75 Mikrometern liegt,
wobei die Vorrichtung so ausgebildet ist, daß (a)
- das filtrierende Element in Form eines ebenen Bogens (5) vorliegt, der eine steife Umfangszone (2) aufweist, die die Aussteifung der filtrierenden Oberfläche durch den Aufbau während der Herstellung des genannten filtrierenden Elements gestattet, und
- die genannte erste und zweite Wand auf der genannten, steifen Umfangszone vergossen sind,
und so ausgebildet ist, daß (b)
- die zweite Wand und das filtrierende Element jeweils aus einem weichen Material ausgebildet sind und die Vorrichtung Mittel (22a, 22b, ..., 25a, 25b, ...) aufweist, die es gestatten, durch Zug in einer Ebene das genannte filtrierende Element auszusteifen, und
- die genannten Mittel zum Aussteifen des filtrierenden Elements ein steifes Gehäuse (23) aufweisen, an dem der filtrierende Beutel zeitweise befestigt sein kann, wobei eine Zugspannung im filtrierenden Element in seiner Ebene sichergestellt ist.

14. Vorrichtung nach dem vorangehenden Anspruch, dadurch gekennzeichnet, daß die genannten Entleerungsmittel in der Nähe des Umfangs des filtrierenden Beutels gelegen sind und den genannten Einlaßmitteln benachbart sind.

15. Vorrichtung nach irgendeinem der vorausgehenden Ansprüche, dadurch gekennzeichnet, daß die Vorrichtung außerdem einen weichen Beutel (12) aufweist, der dazu bestimmt ist, das genannte, zu filtrierende biologische Fluid aufzunehmen, wobei der genannte Beutel mit den genannten Einlaßmitteln durch eine Rohr- bzw. Schlauchleitung (11) verbunden ist.

16. Vorrichtung nach irgendeinem der vorangehenden Ansprüche, dadurch gekennzeichnet, daß die Vorrichtung außerdem einen weichen Beutel (10) aufweist, der dazu bestimmt ist, das Filtrat aufzunehmen, und mit den genannten Entleerungsmitteln für das Filtrat durch eine Rohr- bzw. Schlauchleitung (9) verbunden ist.
